# EUROPEAN PATENT APPLICATION

(11) **EP 3 855 708 A1**
(43) Date of publication of application: **28.07.2021**
(21) Application number: 18934143.1
(22) Date of filing: 17.09.2018
(51) Int. Cl.: H04L 29/12

(54) **SERVICE DISTRIBUTION DEVICE AND METHOD IN SOFTWARE DEFINED NETWORK, AND STORAGE MEDIUM**

(71) Applicant: Nokia Solutions and Networks Oy, 02610 Espoo (FI)
(72) Inventor: LV, Xiaopeng, Shanghai 201206 (CN); WAN, Yonggen, Shanghai 201206 (CN)
(74) Representative: DREISS Patentanwälte PartG mbB
(86) International application number: PCT/CN2018/105985
(87) International publication number: WO 2020/056550

(57) **Abstract**

Embodiments of the present disclosure provide a device, a method and a computer readable storage medium in a software defined network (SDN). For example, in this method, a request for a service is received from the network device, the request including an identification of the service. An access address accessible to the network device is determined from at least one access address based on an association between at least the identification of the service and at least one access address of at least one instance of the service. Then, the determined access address is transmitted to the network device. This kind of service-based SDN cluster management method is more flexible and efficient.

## Description

### FIELD

Embodiments of the present disclosure generally relate to communication technology, and more specifically, to a device, a method and a computer readable storage medium for service distribution in a software defined network (SDN).

### BACKGROUND

Network function virtualization (NFV) technology and software defined network (SDN) technology have been applied in telecommunication networks. With the NFV and SDN technologies, various network control functions may be provided, such as open shortest path first (OSPF), internet group management protocol (IGMP), path computation engine (PCE), topology computation, access control firewall and the like. A plurality of "over the top" (OTT) applications may also be provided, such as data analysis and artificial intelligence (AI) and the like. These functions or applications may be separated from the network data plane and deployed centrally in SDN controllers.

For the management of a large-scale network, if a single centralized SDN controller is utilized there may be some potential issues, such as performance bottleneck due to processing capacity, latency overhead of communication between a SDN controller and a switch, a single point failure of SDN controller, security vulnerability of hacker attack and the like. To improve reliability and extensibility, a plurality of SDN controllers may form an SDN controller cluster. SDN controllers in the cluster operate in collaboration to manage the underlying SDN switches using distributed controller technology.

To enable the SDN controller cluster to operate properly, integration of technologies, such as data consistency, load balance and virtual IP translation/redirection, is required and the plurality of SDN controllers should collaborate with each other, which causes the system too complicated for both deployment and maintenance.

### SUMMARY

In general, embodiments of the present disclosure provide a device, method and computer readable storage medium for service distribution in an SDN network.

In a first aspect, embodiments of the present disclosure provide a device in an SDN network. The device comprises at least one processor and at least one memory storing computer program codes. The at least one memory and computer program codes are configured to, together with the at least one processor, cause the device to: receive, from a network device, a request for a service, the request comprising an identification of the service. The device is further caused to determine, based on an association between at least the identification of the service and at least one access address of at least one instance of the service, an access address accessible to the network device from the at least one access address; and transmit, to the network device, the determined access address.

In a second aspect, embodiments of the present disclosure provide a method in an SDN network. In this method, a request for a service is received from a network device, the request comprising an identification of the service. An access address accessible to the network device is determined from the at least one access address based on an association between at least the identification of the service and at least one access address of at least one instance of the service. Subsequently, the determined access address is transmitted to the network device.

In a third aspect, embodiments of the present disclosure provide a computer readable storage medium including computer program instructions stored thereon. The instructions, when executed by a processor on the device, cause the device to implement the method according to the second aspect.

It is to be understood that the content described in the Summary is not intended to identify key features or essential features of the claimed subject matter, nor is it intended to be used to limit the scope of the claimed subject matter. Other features of the present disclosure will be more comprehensible with the following depiction.

### BRIEF DESCRIPTION OF THE DRAWINGS

Several example embodiments will be described below with reference to the drawings, in which:
FIG. 1 illustrates an example architecture for constructing a clustered SDN network based on SDN controller hosts;
FIG. 2 illustrates an example architecture of an SDN network in accordance with some embodiments of the present disclosure;
FIG. 3 illustrates an example process of service registration and monitoring with a service resolution system (SRS) in accordance with some embodiments of the present disclosure;
FIG. 4 illustrates an example process of calling service by a network device in accordance with some embodiments of the present disclosure;
FIG. 5 illustrates differences of cluster management between a service-based cluster in accordance with embodiments of the present disclosure and a conventional cluster based on SDN controller hosts;
FIG. 6 illustrates an example deployment of services on SDN controllers in accordance with some embodiments of the present disclosure;
FIG. 7 is a flowchart illustrating a method in accordance with some other embodiments of the present disclosure; and
FIG. 8 is a block diagram illustrating a device suitable to implement embodiments of the present disclosure.

In the drawings, the same or similar reference symbols refer to the same or similar elements.

### DETAILED DESCRIPTION OF EMBODIMENTS

Embodiments of the present disclosure will be described in the following in more details with reference to the drawings. Although some embodiments of the present disclosure are displayed in the drawings, it is to be understood that the present disclosure may be implemented in various manners, not limited to the embodiments illustrated herein. On the contrary, these embodiments are provided to make the present disclosure more thorough and complete. It is to be understood that the drawings of the present disclosure and embodiments thereof are only for the purpose of illustration, without limiting the scope of protection of the present disclosure.

As used herein, the term "service" refers to any proper controlling function or application provided in an SDN network. Examples of service include but are not limited to open shortest path first (OSPF), internet group management protocol (IGMP), path computation engine (PCE), topology computation and access control firewall, data analysis, artificial intelligence (AI) and so on.

The term "SDN controller" as used herein refers to any suitable device that can provide service in an SDN network. Examples of SDN controller include but are not limited to one or more of the following: a host, a blade server, a personal computer (PC), a router, a switch, a laptop, a tablet and the like.

The term "network device" as used herein refers to any suitable device that can access service in an SDN network, such as a SDN switch or other network entities.

As used herein, the term "circuitry" may refer to one or more or all of the following:
(a) hardware-only circuit implementations (such as implementations in only analog and/or digital circuitry); and
(b) combinations of hardware circuits and software, such as (if applicable): (i) a combination of analog and/or digital hardware circuit(s) with software/firmware and (ii) any portions of hardware processor(s) with software (including digital signal processor(s), software, and memory(ies) that work together to cause an apparatus, such as optical line terminal (OLT), to perform various functions); and
(c) hardware circuit(s) and/or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or a portion of a hardware circuit or processor and its (or their) accompanying software or firmware. For example, if applicable to a particular claim element, the term circuitry also covers, a baseband integrated circuit or processor integrated circuit or an OLT or a similar integrated circuit in other computing device.

As used herein, the term "includes" and its variants are to be read as open-ended terms that means "includes, but is not limited to". The term "based on" is to be read as "based at least in part on". The term "one embodiment" is to be read as "at least one embodiment"; the term "another embodiment" is to be read as "at least one another embodiment". The following text may also contain relevant definitions of other terms.

As stated above, in SDN network management, to improve the network management performance of a single SDN controller and improve reliability and extensibility, a plurality of SDN controllers may operate in collaboration as one SDN controller cluster to manage underlying SDN switcher using distributed controller technologies. The SDN controller cluster is dynamic owing to service interruptions of cluster members or joining of new members. Load balancing or other policy requirement for network optimization may also cause the dynamism of the SDN controller cluster.

To make the SDN controller cluster operate normally, on one hand, the plurality of distributed SDN controllers should collaborate with each other to maintain consistency of data and state between SDN controllers and manage joining/leaving of members in the SDN controller cluster dynamically. On the other hand, SDN controller cluster should manage the load balance of the distributed SDN controllers so as to assign a proper SDN controller in a dynamic environment to communicate with and manage the underlying SDN switches.

Therefore, the following aspects of management of the SDN controller cluster are very important: managing the dynamic joining/leaving of members in the SDN controller cluster effectively, maintaining consistency of data/state in the whole cluster, and assigning suitable SDN controllers based on processing capability (such as load state) or geographical location (for latency optimization) and other policies dynamically to manage the underlying SDN switches.

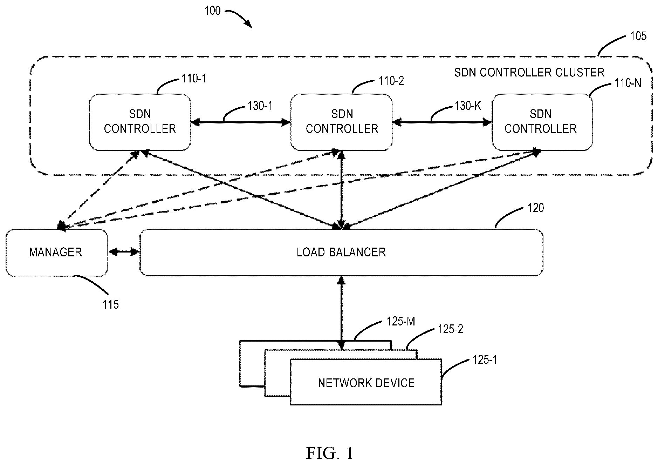

FIG. 1 illustrates an example architecture for constructing a clustered SDN network 100 based on SDN controller hosts. In the network 100, a cluster 105 is consisted of a plurality of SDN controllers 110-1, 110-2... 110-N (collectively referred to as "SDN controller 110"). A manager (e.g., Zookeeper) 115 interacts with the SDN controllers 110 to monitor them. The manager 115 may further interact with a load balancer 120 to assign a suitable SDN controller dynamically based on processing capability (such as load state) or other policies so as to manage the underlying network devices (such as SDN switches) 125-1, 125-2... 125-M. To maintain data consistency within the cluster 105, there are east-west interface connections 130-1... 130-K (collectively referred to as "interface connection 130") existed between the SDN controllers 110 for communication and synchronization between the SDN controllers 110. N, M and K are any proper positive integers.

In addition to realizing data synchronization through the interface connection 130, there is also another approach which is data-centric. This approach takes an architecture with separated data and logic, and uses a shared data storage bank to store the state and operation data of the SDN controller 110, thus ensuring data consistency in the case of switchover of SDN controller 110.

In the network 100, the manager 115 may manage the joining and leaving of the SDN controller 110 in the cluster 105. For example, the manager 115 may monitor a "znodes" created by the SDN controller 110 in its data structure (such as a Zookeeper node or "znodes" list). If a certain SDN controller 110 stops servicing, its corresponding "znode" will be deleted from the monitored "zondes" list so as to trigger the corresponding cluster management operation.

To assign a suitable SDN controller 110 dynamically based on optimization policies such as load balance to manage the underlying network device 125, as shown in FIG. 1, the load balancer 120 is responsible for distributing a request from the network device 125 to a suitable SDN controller 110. In the network 100, a virtual Internet protocol (IP) address of the load balancer 120 is published to the network device 125. When the network device 125 visits the virtual IP address, the communication from the network device 125 will be translated and redirected to an actual IP address of the SDN controller 110 in the cluster 105. Conventionally, the load balance is based on SDN controller hosts. The load balance algorithm may be round robin or Hash algorithm and so on.

The cluster management manner based on the manager 110 (such as Zookeeper) shown in FIG. 1 requires the integration and collaboration of technologies of data consistency, load balance and virtual IP translation and redirection. Besides, the load balancer 120 should have high traffic processing capacity to avoid becoming a traffic bottleneck. This makes the system too complex for both deployment and maintenance.

It has been realized by the inventor that this cluster created based on SDN controller hosts requires each SDN controller to be exactly the same, that is, having the same capability as well as service. However, in reality, each SDN controller may not be the same in terms of processing capability, storage capability and network bandwidth.

It has also been realized by the inventor that the provision of service and data is the nature of networking and the host-centric connection is just an intermediary process for networking to provide service and data. Providing different services in different SDN controllers will increase flexibility considerable for the configuration of the SDN controllers 110. Moreover, service is a basic control function for managing the underlying network device in the SDN controller. In actual application, particularly for the development of NFV, cloud and micro-service, function or service is normally a basic granularity of warning or failure which needs to be optimized or corrected. Therefore, there is a need to create a service-level cluster which can manage the joining or leaving at service-level.

Embodiments of the present disclosure provide a service-oriented SDN cluster management mechanism which is service-centric to form an SDN service cluster rather than an SDN controller host cluster. This service-centric mechanism introduces a service resolution system (SRS) which maintains an association between at least the identification of service in the SDN network and the access address of each instance (for instance, running on an SDN controller) of the service. After receiving a request for the service from the network device, on the basis of this association, SRS parses the service request from the network device into the access address of the corresponding service instance. As such, the network device may use this access address to access the corresponding service.

According to the embodiments of the present disclosure, SDN controller may collaborate at the service level and assign services for managing the underlying network devices (such as SDN switches) dynamically at the service level based on policies such as load balance and geographical location optimization etc. In this manner, it is possible to realize more accurate management of SDN controller and assignment of services provided by the SDN controller to the underlying network device.

For example, the SRS may perform service resolution and determine policies such as service load balance and location optimization, so as to find the service routing locator for the underlying network device, such as the access address (such as IP address) of the SDN controller which hosts the service. The SRS may also maintain dynamically the association between the service identification and the access address (that is, the location of the service) of the service instance operating on the SDN controller, manage the joining and leaving of the service in the service cluster dynamically and monitor the service load condition in real-time and so on.

In this kind of SDN service cluster, the service required by the underlying network device may be routed through the identification of the service and based on service load condition and/or other additional routing policy such as geographical location optimization or client type. The service and its identification are the basic elements of routing. The joining or leaving at the service level and the load balance of the service granularity may be managed in the cluster and the communication between the associated SDN controller and network device may be managed based on the service invoked by the network device. Besides, the SDN controller as the service container may install services freely. These services may be the same or different. This kind of service cluster is more flexible.

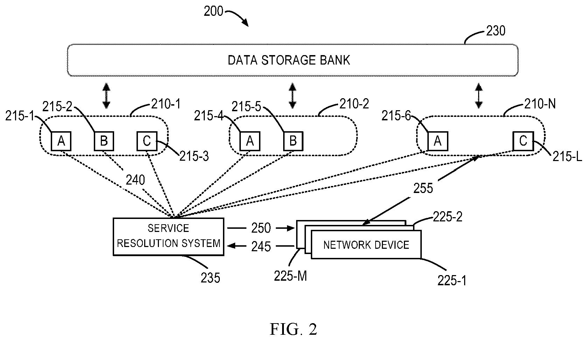

FIG. 2 illustrates an example architecture of an SDN network 200 in accordance with some embodiments of the present disclosure. The network 200 includes a plurality of SDN controllers 210-1, 210-2... 210-N (collectively referred to as SDN controller 210). There are one or more service instances 215-1, 215-2...215-L (collectively referred to as "service instance 215") executed on each SDN controller 210. The service instance 215 may be accessed or invoked by the underlying network device 225-1, 225-2...225-L (collectively referred to as "network device 225") in the network 200. N, M and L are any proper positive integer.

Under the support of virtualization and cloud technology, the service instance 215 may be virtualized and run on different virtual machines in the SDN controller 210. Each service instance 215 in the SDN controller 210 may have its respective warning, failure, load state and so on.

Owing to the different configurations of the SDN controller 210 and dynamic changes of the service instance 215 on each SDN controller 210, it is possible for the SDN controller 210 not to provide totally the same services. The service instances 215 on different SDN controllers 210 may execute the same or different functions or applications.

In the example shown in FIG. 2, the service instance 215-1 running on the SDN controller 210-1, the service instance 215-4 running on the SDN controller 210-2 and the service instance 215-6 running on the SDN controller 210-3 execute the same function. The service instance 215-2 running on the SDN controller 210-1 and the service instance 215-5 running on the SDN controller 210-2 execute the same function. The service instance 215-2 running on the SDN controller 210-1 and the service instance 215-N running on the SDN controller 210-3 execute the same function. Thus, the deployment and service configuration of the SDN controller 210 have great flexibility. Each SDN controller 210 does not need to provide exactly the same service or require that all have high volume.

In the network 200, each service and its instance 215 have a corresponding identification which is unique in the network 200. For example, different instances of the same service have the same service identification and instances of different services have different service identifications. In the example shown in FIG. 2, service instances 215-1, 215-4 and 215-6 have the service identification A. Service instances 215-2 and 215-5 have the service identification B, and service instances 215-3 and 215-L have the service identification C. Any suitable naming manner currently known or to be developed in the future may be utilized to name the service. As an example, to ensure the integrity of the identification and the service, hash algorithm based on the software image of the service may be used to generate a unique identification.

In the network 200, the architecture with separated service data and logic and shared data storage are utilized to maintain data consistency between services. For example, as shown in Fig. 2, there is a data storage bank 230 the network 200 includes. Being a shared data storage bank, the data storage bank 230 may interact with the SDN controller 210 to store information such as state of the service instance running on the SDN controller 210 and operation data. The utilization of the data storage bank 230 causes the service instance 215 in each SDN controller 210 to be stateless so that in a dynamic environment, such as in the case of service switchover, consistency of service related information is maintained.

It is to be understood that only for the purpose of example rather than limitation, the data storage bank 230 is illustrated in FIG. 2. In some embodiments, it is possible not to use this kind of architecture with separated data and logic while the SDN controllers 210 may interact service state, operation data and so on through the interface connection (such as the interface connection 130 in FIG. 1) there between to maintain the consistency of data.

The network 200 may further include a service resolution system (SRS) 235 which is responsible for service resolution to determine the access address of the service for the network device 225 requesting the service. In the embodiments of the present disclosure, the SRS 235 maintains at least an association between the identification of the service and the access address of each instance 215 of the service (such as the IP address of the SDN controller 210 running the corresponding instance 215 or other routing locator).

In some embodiments, the SRS 235 may also consider predefined policies such as load balance and location optimization to select the service instance 215 accessible to the network device 225. In this case, the SRS 235 may bind the state or attribute and service identification of the service instance 215 with the access address of the service instance 215. Thus, the selection of service instance may be performed based on predefined policy, thereby providing greater extensibility for policy management and policy-based service selection.

For example, the SRS 235 may maintain the association among the identification of the service, the access address of each instance 215 of the service and the attribute (such as load condition) of the service instance 215. Thus, SRS 315 may find the most suitable service instance with the policy algorithm associated with service load balance. This association may be stored locally at the SRS 235 or an external storage device accessible by the SRS 235 (not shown) in the form of a table.

In some embodiments, as shown in FIG. 2, the SRS 235 may create the association mentioned above by interacting 240 with the SDN controller 210. For example, the SRS 235 may receive the routing address (such as IP address) of the SDN controller 210 and the identification of the service enabled by the SDN controller 210 from the SDN controller 210 and then create the association between the routing address and the service identification. If the SRS 235 may also receive the attribute (such as load condition) of the service instance running on the SDN controller 210 from the SDN controller 210, the SRS 235 may create the association among the routing address of the SDN controller 210, the identification of the service and the attribute of the service instance.

In some embodiments, the SRS 235 may update the created association. For example, when a new service is activated at the SDN controller 210 or when a certain service fails or stops, the SRS 235 may obtain corresponding information from the SDN controller 210 and update the association based on the information. For example, the SRS 235 may register the newly activated service or log out the stopped service.

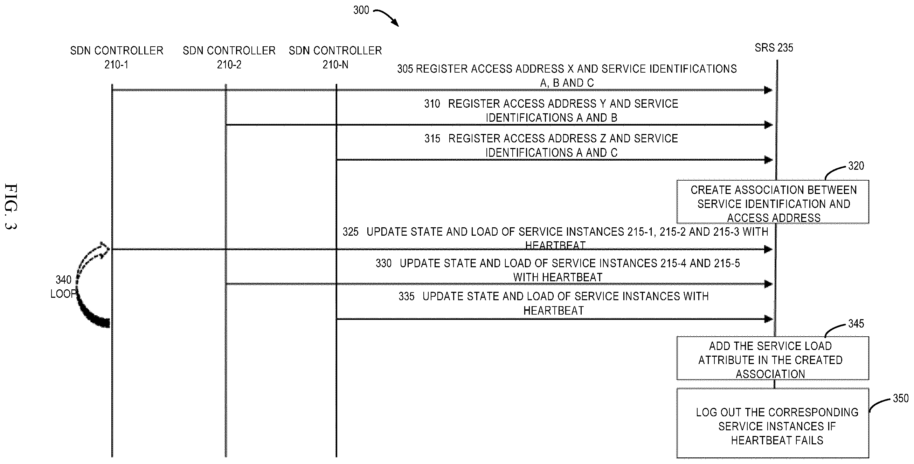

FIG. 3 illustrates an example process 300 of service registration and monitoring by the SRS 235 in accordance with some embodiments of the present disclosure. In the process 300, there are two processes which are service registration and service monitoring. The service registration process may be performed during the activation phase of the SDN controller 210. For example, SDN controller 210-1 may register 305 its own IP address X and the supported identifications A, B and C to the SRS 235. The SDN controller 210-2 may register 310 IP address Y and service identifications A and B to the SRS 235. SDN controller 210-N may register 315 IP address Z and service identifications A and C to the SRS 235. At block 320, the SRS 235 creates associations between each IP addresses X, Y and Z and the service identifications A, B and C respectively.

The service monitoring phase may be implemented during the operation phase of the SDN controller 210 for monitoring the state of the corresponding service instance 215 running on the SDN controller 210, for example, if there is a new service instance that is activated; or monitoring the attribute of the service instance 215, for example, if some existing service instance fails. The monitoring of service may be performed with a heartbeat mechanism. For example, when the SDN controller 210 is in an operation phase, the SDN controller 210 may update its service state (such as the service joins or leaves) and service attribute (such as service load condition) periodically (per second) through heartbeat interactions with the SRS 235.

As shown in FIG. 3, the SDN controller 210-1 updates 325 the state and load of the service instances 215-1, 215-2 and 215-3 through a heartbeat interaction. The SDN controller 210-2 updates 330 the state and load of the service instances 215-4 and 215-5 through a heartbeat interaction. The SDN controller 210-N updates 335 the state and load of service instances 215-6 and 215-L through a heartbeat interaction. The blocks 325, 330 and 335 may be performed (340) cyclically. At the block 345, the SRS 235 may add the load of each service instance 215 running the SDN controller 210 into the created association.

This association may be recorded in the following Table 1.

**Table 1**

| IP address | Service identification | Service load |
|---|---|---|
| X | A | 80% |
| X | B | 20% |
| X | C | 70% |
| Y | A | 90% |
| Y | B | 50% |
| Z | A | 20% |
| Z | C | 30% |

Table 1 stores association relation among service identifications A, B and C, IP addresses X, Y and Z and the load condition (represented in percentage) of the respective service instance 215.

When a new service is added (for instance, added or activated) or an existing service leaves (such as deactivated or fails), the updated service state will trigger a modification of the corresponding association relation in the SRS 235. For example, when a certain service instance 215 on the SDN controller 210 is deactivated or fails, the service instance 215 will be logged out by the SRS 235. As illustrated in FIG. 3, at block 350, the SRS 235 may log out the corresponding service instance 215 when a certain heartbeat interaction fails. By updating the load condition of the service instance 215 frequently, the changes of service load condition may be reflected by the created association in real-time.

For example, when the service instance 215-2 running on the SDN controller 210-2 fails, Table 1 may be updated to the following Table 2.

**Table 2**

| IP address | Service identification | Service load |
|---|---|---|
| X | A | 80% |
| X | B | 20% |
| X | C | 70% |
| Y | A | 90% |
| Z | A | 20% |
| Z | C | 30% |

In Table 2, the item associated with the IP address Y and service identification B are deleted.

Continuing to refer to FIG. 2, according to the embodiments of the present disclosure, the SRS 235 receives 240 a service request containing a service identification (such as identification A) from the network device 225. Based on the association between the service identification and the access address of the associated service instance 215, the SRS 235 selects the access address accessible to the network device 225. For example, when the service request from the network device contains the service identification A, the SRS 235 may select the access address of the service instance 215-6 based on the association between the service identification A and the access addresses of service instances 215-1, 215-4 and 215-6. Subsequently, the SRS 235 transmits 245 the selected access address to the network device 225. With this access address, the network device 225 may interact 250 with the corresponding SDN controller 210 (such as the SDN controller 210-N) to access or invoke the corresponding service instance 215 (such as the service instance 215-6).

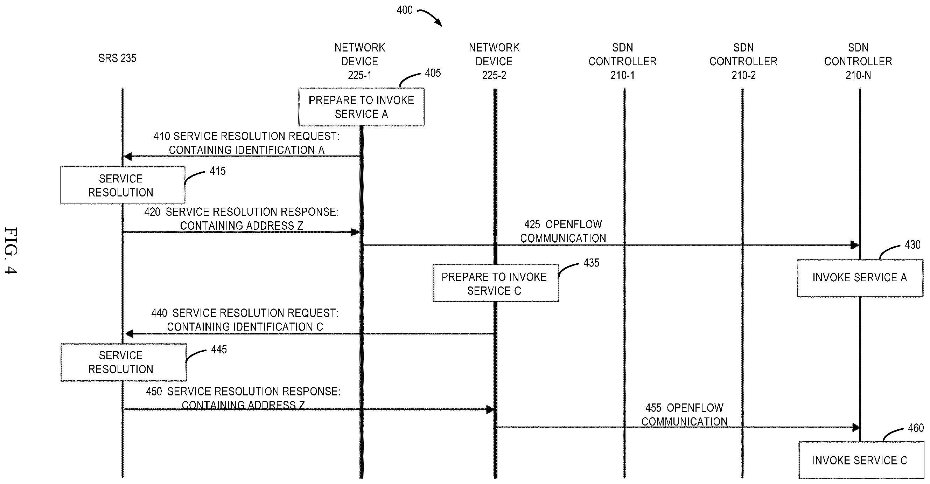

FIG. 4 illustrates an example process 400 for an invoking service of a network device 225 in accordance with some embodiments of the present disclosure. As illustrated in FIG. 4, the network device 225-1 prepares to invoke a service whose identification is A at block 405. At block 410, the network device 225-1 transmits a service resolution request which contains the service identification A to the SRS 235. At block 415, SRS 235 performs service resolution. For example, by looking up in the table recording associations among the service identification, the access address of the service instance and the load condition of the service instance, it is determined that the service instance 215-6 on the SDN controller 210-N is available to the network device 225-1 and the identification A is resolved as the IP address Z. At block 415, the SRS 235 transits a service resolution response which contains the address Z to the network device 225-1. According to this address Z, the network device 225-1 performs Openflow communication with the SDN controller 210-N at block 425. Any suitable Openflow communication technology currently known or to be developed in the future may be used. The scope of the present disclosure is not limited in this regard. At block 430, the SDN controller 210-N invokes the service instance 215-6 corresponding to the identification A.

Next, at block 435, the network device 225-2 prepares to invoke the service whose identification is C. At block 440, the network device 225-2 transmits a service resolution request which contains the service identification C to the SRS 235. At block 445, the SRS 235 performs service resolution. At block 450, the SRS 235 transmits a service resolution response which contains the address Z to the network device 225-1. Based on the address Z, the network device 225-2 performs Openflow communication with the SDN controller 210-N at block 455. At block 460, the SDN controller 210-N invokes the service instance 215-L corresponding to the identification C.

For the network device 225 (such as the SDN switcher), the requested service is unrelated to location (such as the SDN controller 210 providing the service). The network device 225 does not need to care about the specific location of the service while it only needs to request service from the SRS 235 through the service identification. When the service location is acquired from the SRS 235, the network device 225 may perform conventional communication (such as Openflow communication) with a target SDN controller 210 so as to access or invoke the corresponding service.

Based on NFV and cloud development for the provision of service, the embodiments of the present disclosure take service as the center of the new network architecture and adjust a conventional cluster based on SDN controller host to service-based cluster. In the service-based cluster, service failover and service plug&play will be implemented in a more accurate and efficient manner. This kind of service-based cluster is more advantageous in terms of cluster management.

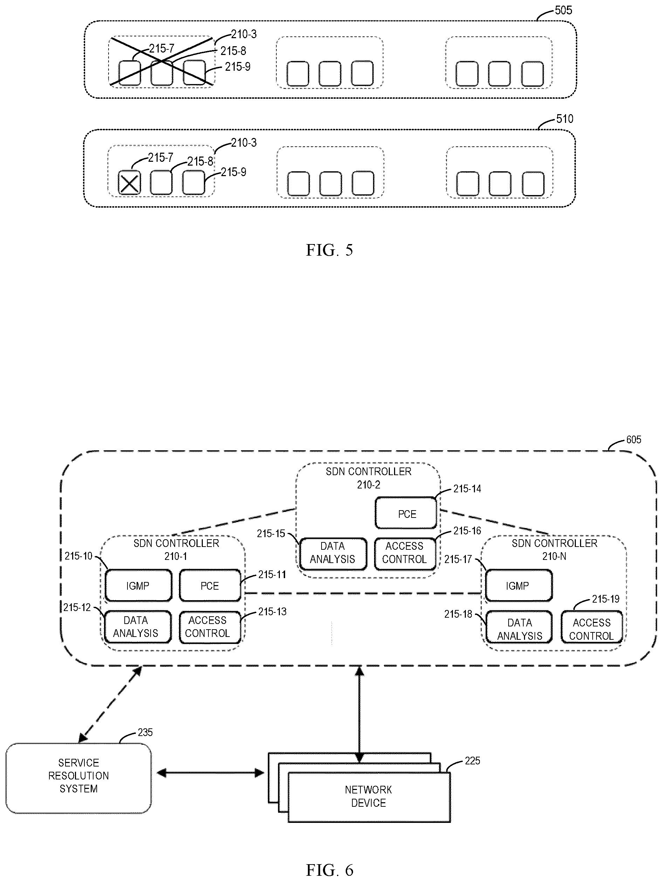

FIG. 5 illustrates differences in cluster management aspect between the service-based cluster in accordance with the embodiments of the present disclosure and the conventional cluster based on SDN controller host. As shown in FIG. 5, in a cluster 505 based on SDN controller host, when a certain service instance 215-7, 215-8 or 215-9 on the SDN controller 210-3 fails, it will cause the failure of the whole SDN controller 210-3, that is, all the services in the SDN controller 210-3 will stop.

In a service-based cluster 510, if a service instance 215-7 running on the SDN controller 210-3 fails, only the service instance 215-7 stops running while other service instances 215-8 and 215-9 will not be affected and can continue to serve for the underlying network devices 225. This more accurate management mechanism enhances the redundancy and protection capability of the SDN cluster and at the same time minimizes the influence on processing capability of the cluster or the probability that the SDN controller 210 is shut down to the greatest extent.

In this service-centric architecture, service provision is irrelevant to the SDN controller, as such flexibility of service configuration and SDN controller deployment can be provided in a dynamic service cluster environment without deploying exactly the same services in the SDN controller. In actual conditions, flexible and different servicedeployment should be performed in the SDN controller out of consideration of the following aspects, such as:
- different processing capabilities of the SDN controller
- different latency sensitivities of services to geographical location
- different load requirements of service
- different security protection levels of service
- cost optimization of the cluster.

FIG. 6 illustrates an example deployment on SDN controllers in accordance with some embodiments of the present disclosure. In this example, there are three SDN controllers 210-1, 210-2 and 210-N whose IP addresses are X, Y and Z respectively in a cluster 605. It is assumed that the three SDN controllers 210-1, 210-2 and 210-N have different processing capabilities, geographical proximity and costs, as indicated in the following Table 3.

**Table 3**

| IP address of SDN controller | Processing capability | Geographical proximity | Costs |
|---|---|---|---|
| X | High | Good | 100% |
| Y | Medium | Good | 70% |
| Z | Low | Bad | 40% |

The cluster 605 may provide services including IGMP, IGMP, access control, data analysis etc. Each service has different requirement i load, latency and security, as shown in the following Table 4.

**Table 4**

| Service | Latency sensitivity | Security level | Service load |
|---|---|---|---|
| IGMP | High | Low | Medium |
| IGMP | Low | Medium | Low |
| Access control | Low | Low | Medium |
| Data analysis | Low | Low | Low |

As shown in FIG. 6, to meet the requirement of IGMP which is latency sensitivity, such as quick switchover, IGMP service may be deployed in the SDN controllers 210-1 and 210-2 (for example, service instances 215-10 and 215-17) since they have good geographical proximity. To balance high service load of data analysis service, all of the SDN controllers 210-1, 210-2 and 210-N will be installed with service instances 215-12, 215-15 and 215-18 of the service. Besides, the access control service will also be deployed to all the three SDN controllers 210-1, 210-2 and 210-N (such as service instances 215-13, 215-16 and 215-19) to provide better redundancy in order to prevent service failure or hacker attack. Since PCE service has lower requirement on load, security and latency, it is possible to deploy instances 215-11 and 215-14 of the service only in the SDN controllers 210-1 and 210-N. Compared with a cluster based on SDN controller host (requiring three identical SDN controllers with high costs to deploy all these services), the total cost of SDN controller in the service-based cluster 605 is optimized and reduced by 30%, from 300 to 210.

Compared to complicated multi-technology integration, a simple solution for cluster management and service resolution is provided with SRS through simple binding of service identification and service location. Besides, since there is no service going through the SRS, potential performance bottleneck in the load balance solution is avoided. Moreover, conventional policies, such as load state, which are used to select and assign SDN controller host to underlying network devices (such as SDN switchers) will become more accurate as the cluster management turns to service level, thereby implementing more refined policy management and implementation. For example, according to the conventional policy based on SDN controller host, when the total load of a certain SDN controller is too high, the SDN controller host will be unable to accept new tasks. However, if the service-level policy is utilized, the low-load service in the SDN controller host can still accept new tasks, which makes the most use of the processing capability of the SDN controller. Moreover, the SRS may add more attributes, such as service load, client type and geographical location to the created association. Thus, SRS can be extended easily to tackle various new policies thereby achieving more complicated and more accurate service selection. Compared with the conventional cluster based on SDN controller host, the service-based cluster according to the embodiments of the present disclosure is simpler and more efficient, extensible and cost-efficient.

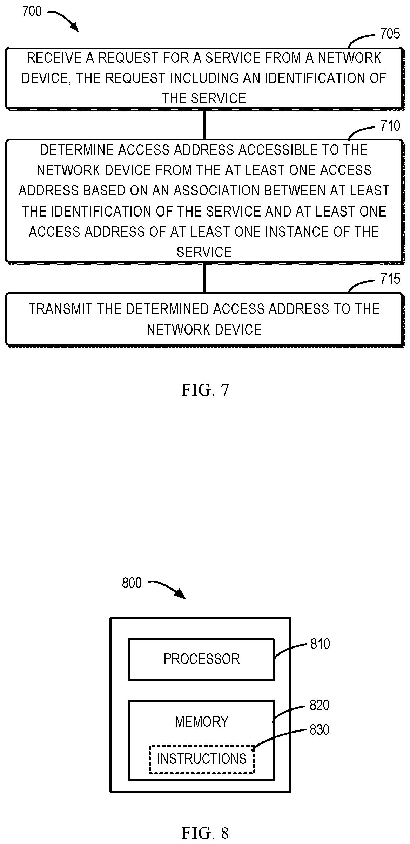

FIG. 7 is a flowchart illustrating an example method 700 in accordance with some embodiments of the present disclosure. The method 700 may be implemented at the SRS 235 shown in FIG. 2. For ease of discussion, the method 700 will be depicted below in detail with reference to FIG. 2.

As illustrated, at block 705, a request for a service is received from the network device 225, the request comprises an identification of the service. At block 710, based on an association between at least the identification of the service and at least one access address of at least one instance 215, an access address accessible to the network device 225 is determined from the at least one access address. At block 715, the determined access address is transmitted to the network device 225.

In some embodiments, the association comprises an association among the identification of the service, the access address of at least one instance 215 and an attribute of at least one instance 215.

In some embodiments, when the access address is determined, at least one instance 215 associated with the identification of the service may be determined first. Then, based on the attribute of the instance 215, the instance 215 accessible to the network device 225 is selected and an access address of the selected instance 215 is determined as the access address accessible to the network device 225.

In some embodiments, at least one instance 215 is executed on the at least one SDN controller 210, and the access address of the instance 215 comprises a routing address of the SDN controller 210.

In some embodiments, it is possible to receive the routing address (such as IP address) of the SDN controller 210 and the identification of at least one enabled service from the at least one SDN controller 210. Subsequently, an association between the routing address of at least the SDN controller 210 and the identification of the at least one service is created.

In some embodiments, the association includes the association among the routing address of at least one SDN controller 210, the identification of at least one service enabled by the SDN controller 210 and the attribute of the instance 215 of the service executed on the SDN controller 210. In these embodiments, when association is created, it is further possible to receive the attribute of instance 215 of the service from the SDN controller 210 and created the association among the routing address of the SDN controller 210, the identification of the service and the attribute of the instance 215 of the service.

In some embodiments, updating information on at least one service enabled by at least one SDN controller 210 may be obtained and the created association may be updated based on this updating information.

It is to be understood that the operations and features executed by SRS 235 described above with reference to FIGS. 2-6 also apply to method 700 and have the same effect and the specific details will not be repeated.

In some embodiments, the apparatus capable of implementing method 700 (such as SRS 235 shown in FIG. 2) may include corresponding means for implementing steps of method 700. These means may be implemented in various manners, for example, through circuitry or software module.

In some embodiments, the apparatus includes: means for receiving a request for a service from the network device, the request comprises an identification of the service; means for determining, from at least one access address, an access address accessible to the network device based on an association between at least the identification of the service and at least one access address of the at least one instance of the service; and means for transmitting the determined access address to the network device.

In some embodiments, the association includes an association among the identification of the service, the access address of at least one instance and an attribute of at least one instance.

In some embodiments, the means for determining access address may include: means for determining at least one instance associated with the identification of the service; means for selecting an instance accessible to the network device from at least one instance based on the attribute of the at least one instance; and means for determining an access address of the selected instance as the access address accessible to the network device.

In some embodiments, at least one instance is executed the at least one SDN controller and the access address of the at least one instance includes the routing address of the at least one SDN controller.

In some embodiments, the apparatus may further include: means for receiving the routing address of at least one SDN controller and an identification of at least one service enabled by the at least one SDN controller from the at least one SDN controller; and means for creating an association between the routing address of at least one SDN controller and the identification of the at least one service.

In some embodiments, the association includes an association among the routing address of the at least one SDN controller, the identification of at least one service and an attribute of instance of at least one service executed on the at least one SDN controller. The means for creating the association may include: means for receiving the attribute of an instance of at least one service from at least one SDN controller; and means for creating the association among the routing address of the at least one SDN controller, the identification of the at least one service and the attribute of the instance of at least one service.

In some embodiments, the apparatus may further include: means for obtaining updating information on at least one service enabled by the at least one SDN controller; and means for updating the created association based on updating information.

FIG. 8 is a block diagram illustrating a device 800 suitable to implement embodiments of the present disclosure. The device 800 may be implemented at SRS 235 or a part of SRS 235 shown in FIG. 2.

As illustrated in FIG. 8, the device 800 includes a processor 810 which controls the operations and functions of device 800. For example, in some embodiments, the processor 810 may implement various operations by means of instructions 830 stored in the memory 820 coupled thereto. The memory 820 may be of any type suitable to the local technical network and may be implemented using any suitable data storage technology such as semiconductor based memory devices, magnetic memory devices and systems, optical memory devices and systems, as non-limiting examples. While only one memory unit is shown in FIG. 8, there may be several physically distinct memory modules in the device 800.

The processor 810 may be of any type suitable to the local technical network, and may include one or more of general purpose computers, special purpose computers, microprocessors, digital signal processors (DSPs) and processors models based on multicore processor architecture, as non-limiting examples. The device 800 may have multiple processors 810 which may include communication modules (not shown) that implement reception and transmission of information in a wireless or wired manner by means of optical fiber or cable and so on.

The processor 810, by means of performing instructions, causes the device 800 to execute the operations and features of SRS 235 described above with reference to FIGS. 2 to 7. All the features as described above with reference to FIGS. 2 to 7 are likewise applicable to the device 800 and will not be repeated herein.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of the embodiments of the present disclosure are illustrated and described as block diagrams, flowcharts, or using some other pictorial representations, it is to be understood that the blocks, apparatuses, systems, techniques or methods described herein may be implemented in, as non-limiting examples, hardware, software, firmware, special purpose circuits or logic, general purpose hardware or controller or other computing devices, or some combination thereof.

As an example, embodiments of the present disclosure may be described in the context of computer-executable instructions, such as those included in program modules, being executed in a device on a target real or virtual processor. Generally, program modules include routines, programs, libraries, objects, classes, components, data structures, or the like that perform particular tasks or implement particular abstract data types. The functionalities of the program modules may be combined or split between program modules as desired in various embodiments. Machine-executable instructions for program modules may be executed within a local or distributed device. In a distributed device, program modules may be located in both local and remote storage media.

Program codes for carrying out methods of the present disclosure may be written in any combination of one or more programming languages. These program codes may be provided to a processor of a general purpose computer, special purpose computer, or other programmable data processing apparatus, such that the program codes, when executed by the computer or other programmable data processing apparatuses, cause the functions/operations specified in the flowcharts and/or block diagrams to be implemented. The program code may execute entirely on a machine, partly on the machine, as a stand-alone software package, partly on the machine and partly on a remote machine or entirely on the remote machine or a server.

In the context of the present disclosure, the computer program codes or related data may be carried by any suitable carrier to enable the device, apparatus or processor to perform various processes and operations as described above. Examples of the carrier include a signal, computer readable media and so on.

Examples of signals include propagation signals in electrical, optical, radio, audio or other forms, such as a carrier, ultraviolet signal and so on.

Computer readable medium may be any tangible medium that includes or stores a program for or about an instruction execution system, apparatus or device. The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), a digital versatile disc (DVD), an optical storage device, a magnetic storage device, or any suitable combination of the foregoing.

Further, while operations are depicted in a particular order, this should not be understood as requiring that such operations are performed in the particular order shown or in sequential order, or that all illustrated operations are performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A device in a software defined network, SDN network, comprising:
at least one processor, and
at least one memory storing computer program codes,
the at least one memory and the computer program codes configured to, with the at least one processor, cause the device to:
receive, from a network device, a request for a service, the request comprising an identification of the service;
determine, based on an association between at least the identification of the service and at least one access address of at least one instance of the service, an access address accessible to the network device from the at least one access address; and
transmit, to the network device, the determined access address.

2. The device according to claim 1, wherein the association comprises an association among the identification of the service, the access address of the at least one instance and an attribute of the at least one instance.

3. The device according to claim 2, wherein the device is caused to determine the access address by:
determining the at least one instance associated with the identification of the service;
selecting, based on the attribute of the at least one instance, an instance accessible to the network device from the at least one instance; and
determining an access address of the selected instance as the access address accessible to the network device.

4. The device according to claim 1, wherein the at least one instance is executed on at least one SDN controller, and the access address of the at least one instance comprises a routing address of the at least one SDN controller.

5. The device according to claim 4, wherein the device is further caused to:
receive, from the at least one SDN controller, the routing address of the at least one SDN controller and an identification of at least one service enabled by the at least one SDN controller; and
create an association between the routing address of the at least one SDN controller and the identification of the at least one service.

6. The device according to claim 5, wherein the association comprises an association among the routing address of the at least one SDN controller, the identification of the at least one service and an attribute of an instance of the at least one service executed on the at least one SDN controller, and the device is caused to create the association by:
receiving, from the at least one SDN controller, the attribute of the instance of the at least one service; and
creating the association among the routing address of the at least one SDN controller, the identification of the at least one service and the attribute of the instance of the at least one service.

7. The device according to claim 5 or 6, wherein the device is further caused to:
obtain updating information on the at least one service enabled by the at least one SDN controller; and
update the created association based on the updating information.

8. A method implemented in a software defined network, SDN network, comprising:
receiving, from a network device, a request for a service, the request comprising an identification of the service;
determining, based on an association between at least the identification of the service and at least one access address of at least one instance of the service, an access address accessible to the network device from the at least one access address; and
transmitting, to the network device, the determined access address.

9. The method according to claim 8, wherein the association comprises an association among the identification of the service, the access address of the at least one instance and an attribute of the at least one instance.

10. The method according to claim 9, wherein determining the access address comprises:
determining the at least one instance associated with the identification of the service;
selecting, based on the attribute of the at least one instance, an instance accessible to the network device from the at least one instance; and
determining an access address of the selected instance as the access address accessible to the network device.

11. The method according to claim 8, wherein the at least one instance is executed on at least one SDN controller, and the access address of the at least one instance comprises a routing address of the at least one SDN controller.

12. The method according to claim 11, further comprising:
receiving, from the at least one SDN controller, the routing address of the at least one SDN controller and an identification of at least one service enabled by the at least one SDN controller; and
create an association between the routing address of the at least one SDN controller and the identification of the at least one service.

13. The method according to claim 12, wherein the association comprises an association among the routing address of the at least one SDN controller, the identification of the at least one service and an attribute of an instance of the at least one service executed on the at least one SDN controller, and create the association comprises:
receiving, from the at least one SDN controller, the attribute of the instance of the at least one service; and
creating the association among the routing address of the at least one SDN controller, the identification of the at least one service and the attribute of the instance of the at least one service.

14. The method according to claim 12 or 13, further comprising:
obtaining updating information on the at least one service enabled by the at least one SDN controller; and
updating the created association based on the updating information.

15. An apparatus in a software defined network, SDN network, comprising:
means for receiving, from a network device, a request for a service, the request comprising an identification of the service;
means for determining, based on an association between at least the identification of the service and at least one access address of at least one instance of the service, an access address accessible to the network device from the at least one access address; and
means for transmitting, to the network device, the determined access address.

16. A computer readable storage medium comprising computer program instructions stored thereon which, when executed by a processor on a device, cause the device to implement acts, comprising:
receiving, from a network device a request for a service, the request comprising an identification of the service;
determining, based on an association between at least the identification of the service and at least one access address of at least one instance of the service, an access address accessible to the network device from the at least one access address; and
transmitting, to the network device, the determined access address.

17. The computer readable storage medium according to claim 16, wherein the association comprises an association among the identification of the service, the access address of the at least one instance and an attribute of the at least one instance.

18. The computer readable storage medium according to claim 17, wherein determining the access address comprises:
determining the at least one instance associated with the identification of the service;
selecting, based on the attribute of the at least one instance, an instance accessible to the network device from the at least one instance; and
determining an access address of the selected instance as the access address accessible to the network device.

19. The computer readable storage medium according to claim 16, wherein the at least one instance is executed on at least one SDN controller, and the access address of the at least one instance comprises a routing address of the at least one SDN controller.

20. The computer readable storage medium according to claim 19, wherein the acts further comprise:
receiving, from the at least one SDN controller, the routing address of the at least one SDN controller and an identification of at least one service enabled by the at least one SDN controller; and
creating an association between the routing address of the at least one SDN controller and the identification of the at least one service.

21. The computer readable storage medium according to claim 20, wherein the association comprise an association among the routing address of the at least one SDN controller, the identification of the at least one service and an attribute of an instance of the at least one service executed on the at least one SDN controller, and create the association comprises:
receiving, from the at least one SDN controller, the attribute of the instance of the at least one service; and
creating the association among the routing address of the at least one SDN controller, the identification of the at least one service and the attribute of the instance of the at least one service.

22. The computer readable storage medium according to claim 20 or 21, wherein the acts further comprise:
obtaining updating information on the at least one service enabled by the at least one SDN controller; and
updating the created association based on the updating information.
